# EUROPEAN PATENT APPLICATION

(11) **EP 3 153 966 A1**
(43) Date of publication of application: **12.04.2017**
(21) Application number: 15306608.9
(22) Date of filing: 09.10.2015
(51) Int. Cl.: G06F 9/44, G06Q 10/10

(54) **GRAPHICAL USER INTERFACE EDITORS**

(71) Applicant: Hewlett Packard Enterprise Development LP, Houston, TX 77070 (US)
(72) Inventor: Bossiaux, Flavien, 06254 Mougins Cedex (FR); Moreau, Thomas, 06254 Cedex Mougins (FR)
(74) Representative: Delumeau, François Guy

(57) **Abstract**

A graphical user interface editor is described for managing views comprising widgets, the editor comprising a processor enabling the operations of defining a layout, selecting a widget, configuring the widgets, and displaying the widget in the layout to be performed in any order for editing a view.

## Description

### Background

Graphical user interface (GUI) editors are used for assembling and configuring GUI, for example dashboards.

Creating a GUI using widgets is realized using a certain number of operations that may comprise defining a layout, selecting widgets, configuring widgets and displaying widgets in the layout.

### Brief description of the drawings

The following detailed description references the drawings, wherein:
FIG.1 is a block diagram of an example of a graphical user interface editor.
FIG.2 is a flow chart representing an example method of providing a graphical user interface editor.
FIG.3 is a block diagram of an example graphical user interface editor in use for defining a GUI.
FIG.4 is a state diagram representing example operations that can be performed by a user of a GUI.
FIG.5 is a block diagram of an example computer.

### Detailed description

The following detailed description refers to the accompanying drawings. Wherever possible, the same reference numbers are used in the drawings and the following description to refer to the same or similar parts. While several examples are described in this document, modifications, adaptations, and other implementations are possible. Accordingly, the following detailed description does not limit the disclosed examples. Instead, the proper scope of the disclosed examples may be defined by the appended claims.

Graphical user interfaces (GUI) may comprise views comprising graphical objects or widgets.

A view may be used to display different kinds of data. An example of a view is a dashboard of an operation support system (OSS). A dashboard may provide a user with data relating to the past or current state of a system.

The operation support system may be provided through a console offering visibility throughout networks, applications, services or customer experience.

For example, a system to be observed through a dashboard may be a server for which a user may want to observe how other users connect to this server.

The data that a user may want to observe in a dashboard may be provided in the form of a spreadsheet, from which various graphical representations may be obtained. Graphical representations may include bar charts, line charts, area charts, pie charts, heat charts, spline charts, and other types of charts. These graphical representations may be elaborated at least partially in a widget of a webpage.

Editing a GUI may use a significant number of operations for defining a layout, selecting widgets, configuring the widgets, and assembling the widgets in the layout.

One difficulty appears in particular if these operations are performed by different users, for example users having different profiles and/or different working habits.

For example a functional expert may define what should be provided by a view, a GUI expert may choose an appropriate layout, appropriate widgets, define how the widgets should look like and be should be displayed in said layout, and a domain expert may select data to be displayed by said widgets.

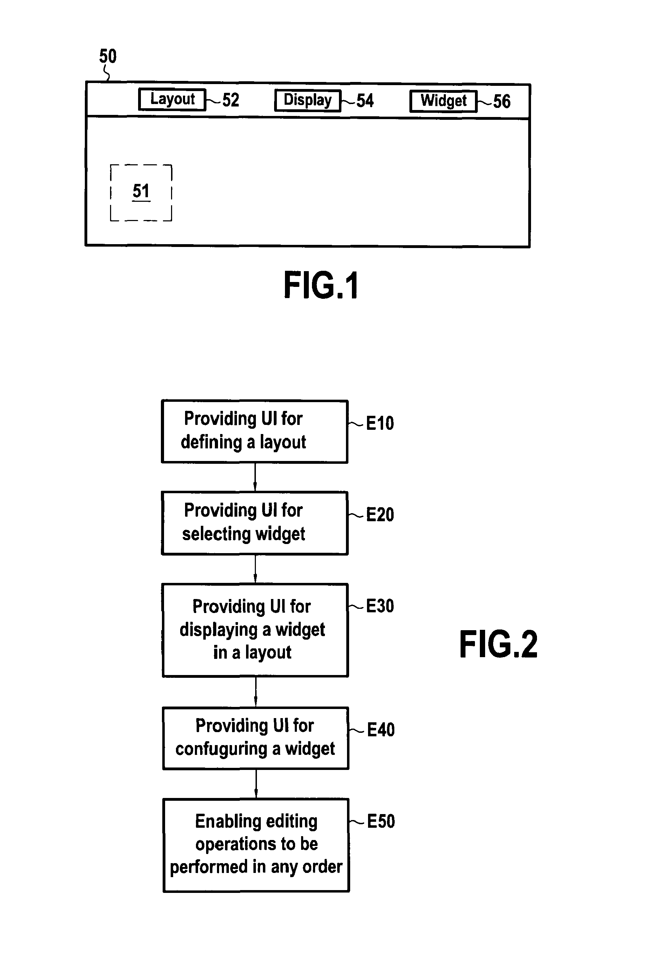

The graphical user interface editor 50 of FIG.1 comprises a processor 51. The processor 51 may be operated by an operating system (which may be a Windows operating system or a Linux operating system, or other similar types of operating systems) to realize the basic machine parameters of the GUI editor.

The GUI editor 50 comprises user interfaces for enabling a user to perform editing operations for editing views.

A user menu 52 may enable a user to select or define a layout and to apply/change the layout of a view.

A user menu 54 may enable a user to display a layout.

A user menu 56 may enable a user to select a widget and configure a widget.

The GUI editor 50 enables the operations of defining a layout, selecting a widget, configuring the widgets, and displaying the widget in the layout to be performed in any order.

The GUI editor 50 provides flexibility and scalability because a user can accomplish the edition steps in the order he or she prefers. In other words, the GUI editor 50 does not force a way to work such as first choose a layout, then fill the layout.... A user may change his mind on a widget or layout something previously selected, the case may be configured ; he does not need to step back one or multiple stages, making him loose some widget or layout configuration.

The GUI editor 50 provides the ability to edit widgets' configuration whether or not they're displayed in a layout to accommodate different types of users with different requirements.

A first user may configure a widget by editing/selecting data and selecting filters to be applied to the data without interacting with a graphical representation of what is being configured.

A second user may edit the look and feel of the display - widgets can be assembled in a layout, and the view can be edited within a web browser.

The GUI editor 50 may run in a web-browser and be fully "responsive", the display depending on the user's device. The widgets and layouts management mechanism may therefore improve flexibility and user experience on any device (Desktop, tablet, mobile phone).

FIG.2 is a flow chart representing a method of providing a graphical user interface editor. The method comprises:
- providing (E10) a user interface for defining a layout;
- providing (E20) a user interface control for selecting widget;
- providing (E30) a user interface for displaying the widget in the layout;
- providing (E40) a user interface for configuring the widget; and
- enabling (E50) a user to perform the operations of defining a layout, selecting a widget, displaying the widget in the layout and configuring the widget in any order.

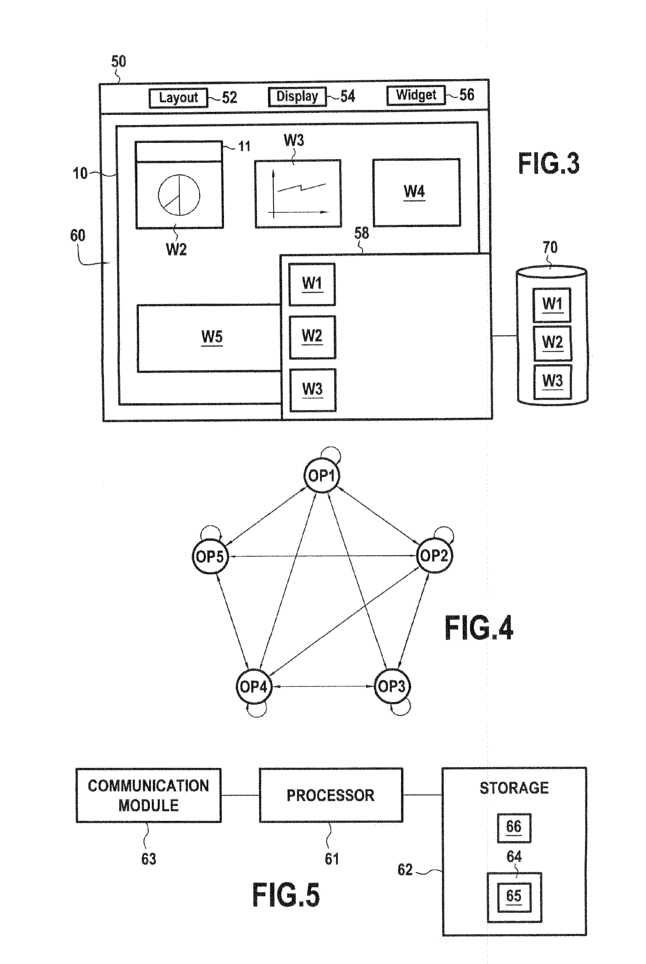

Figure 3 is a diagram of a GUI editor 50 in use for defining a GUI. User menu 54 may enable a user to display a layout in a live-preview zone 60 represented on FIG.3. A library of generic layouts may be provided. This library may be extended: new layouts (add-ons) are directly available and usable in the view editor.

A layout may comprise widgets or not. The display may be updated in real time in the live-preview zone 60. Widgets may thus be displayed in real time, with real data, configuration changes being immediately visible in this preview zone.

User menu 56 may enable a user to select a widget in a library, and when needed to configure the widget. Such a library defines the logical code of the widget. Therefore users may select widgets from the library and configure a widget without having to write code. The library may be extended: new widgets are directly available and usable in the view editor.

The user menu 56 enables a user to configure a widget.

User menu 56 may be used for creating a new widget, placing a widget in a layout, moving a widget from a layout to another.

Configuring a widget may comprise defining at least one property, for example selecting data or combination of data to be displayed by a widget, selecting at least another widget that can communicate with said widget, defining at least one operation that can be performed by said widget, defining graphical configuration of said widget. Widgets may provide or not provide at least one of these properties.

Widgets may be configured in a layout or not being part of a layout, ie in a graphical mode, or in a non graphical mode.

When no layout is applied, there may be no preview at all and widgets cannot be placed to be previewed.

In the example of FIG.3, the GUI editor manage views 10 comprising five widgets W1, W2, W3, W4, and W5. In this example widgets W2 to W5 are displayed, not widget W1.

Widgets may be of any shape, predefined (circles, squares, triangles) or designed by the user using an object editor.

In the example of Figure 3:
- Widget W2 is a pie-chart;
- Widget W3 is a line-chart.

Other types of widget may be used, for example navigation toolbars, bubble charts, bar charts, gauges, solid gauges, range charts, spline charts, column charts and column range charts.

The GUI editor 50 may be a WYSIWYG "'What You See Is What You Get") editor. Thus, a view may be dynamically updated, for example at every change. Therefore, widgets and layouts may be accessed during runtime or construction time.

The GUI editor allows editing a view from scratch or by editing an existing view.

As shown on FIG.3, the GUI editor 50 may comprise a repository 70 for storing instances of widgets W1 to W5 with their configuration, irrespectively of a display status of said widget.

A widget removed from a layout may remain in the repository with its configuration. It avoids to lose completely a widget if is removed from the display. The GUI avoids also the need for the user to hide a widget or graphical element that he or she wants to keep but not display. The GUI avoids also the need to for the user to manage several layers for showing/hiding widgets or graphical elements.

For example; instances of widgets W1 to W5 with their configuration may be stored in the repository 70.

The GUI editor 50 may provide a control interface 58 or menu to list all widgets. The menu 58 may be in charge of the storage of all widget instances in the repository 70, irrespective of the display status of the widgets. In particular, previously configured widgets removed from the layout are accessible through the control interface 58 without losing any configuration associated to these widgets.

The control interface 58 enables a user to perform the operations of defining a layout, selecting a widget, displaying the widget in the layout and configuring the widget in any order. - Such a menu 58 is useful not to correlate widgets and their graphical place. A widget can be defined, configured and placed later on by a graphical web designer.

The repository 70 and the menu 58 act as a "shopping cart" in the senses that it performs the functions of a widget shopping cart. A user can select a widget through this menu or from the preview (WYSIWYG display, if the widget is placed in the layout) and then fully configure it. Some filtering may be provided to filter widget instances and allow the user to know which widgets are placed/not placed in a layout.

Figure 4 is a state diagram representing the operations that can be performed by a user of a GUI:
- operation OP1: a user may change the layout
- operation OP2: a user may place a widget in a layout
- operation OP3: a user may remove a widget from a layout and placed in repository 70 without losing its configuration.
- operation OP4: a user may configure a widget when the widget is placed inside a layout or not:
- operation OP5: a user may modify a widget through its graphical preview or not.

The arrows on the state diagram represent the fact that any operation can be followed by any operation. The operations can be performed in any order. In particular
- a user may modify a widget even if not displayed.
- a layout may be changed after a widget is edited.
- a widget may be configured before having chosen a layout.

The GUI editor 50 enables the dynamic change of a layout. The designer may rework a page without losing any settings on widgets. It is possible for example to remove the layout and choose the best one at the end of the configurations steps to check how many widgets have to be placed. A smart filtering may allow to list only the layouts that are able to embed a given number of widgets.

A view may be associated with a state to facilitate the lifecycle of the GUI. The state may be:
- "Under Construction" while the view is not finished;
- "Awaiting Validation" when the view has been fully developed;
- "Active" when the views has been approved;
- "Inactive" when the view should not be used anymore or temporally.

When a view is associated with a state, the state of the view may be used to define actions that can be performed on the view. Some actions may be restricted to users having specific role or not.

For example:
- A view having the state "Under Construction" may be used only by the view editor. The whole content of menu 58 may be kept for later edition, irrespectively of a display status of the widget.
- A view having the state "Awaiting Validation" may be verified, tested, maybe modified, may be used by the view editor and users with a first role (testers) before being approved by users having a second role (management);
- A view having the sate "Active" may be available for usage inside a console or assembled inside a web front-end.
- A view having the sate "Inactive" may be used only by the view editor.

In Figure 3, the live-preview zone 60 displays the view currently edited as if it was in a state "Active" and used outside the view editor, for example in a console or in web front.

In Figure 3, widget W2 has an additional toolbar 11 to allow to edit it. This toolbar may be called a "widget wrapper".

The computer of FIG.5 comprises a processor 61, a storage 62, and a communication module 63. The Communications with a network, for example the Internet, are implemented through the communication module 63 which may be a modem. The storage 62 comprises various sets of instructions for executing software with the processor 61, which may also use the communication module 63. The storage 62 comprises a set of instructions or code 66 for running a graphical user interface (GUI) editor.

The storage 62 may be any electronic, magnetic, optical, or other physical storage device that stores executable instructions. The storage 62 may then be a non-transitory machine-readable storage medium, for example a Random Access Memory (RAM), an Electrically-Erasable Programmable Read-Only Memory (EEPROM), a storage drive, an optical disc, and the like. The storage 62, or non-transitory machine readable storage medium, is encoded with instructions 66 executable by the processor 61 for running a GUI editor. Therefore, the instructions 66 may comprise:
- providing a user interface for defining a layout;
- providing a user interface control for selecting widget;
- providing a user interface for displaying the widget in the layout;
- providing a user interface for configuring the widget; and
- enabling a user to perform the operations of defining a layout, selecting a widget, displaying the widget in the layout and configuring the widget in any order.

## Claims

1. A graphical user interface editor managing views comprising widgets, comprising:
- a user interface for defining a layout;
- a user interface for selecting a widget;
- a user interface for displaying the widget in the layout;
- a user interface for configuring the widget; and
- a processor enabling the operations of defining a layout, selecting a widget, configuring the widgets, and displaying the widget in the layout to be performed in any order for editing a view.

2. A graphical user interface editor according to Claim 1 comprising a repository for storing instances of said widgets with their configuration, irrespectively of a display status of said widget.

3. A graphical user interface editor according to Claim 2 providing controls for modifying the configuration of a widget stored in said repository.

4. A graphical user interface editor according to Claim 1, wherein the view is associated with a state, the state defining actions that can be performed on the view.

5. A graphical user interface editor according to Claim 4, wherein the state enables the usage of the view inside a console or inside a web front-end.

6. A graphical user interface editor according to Claim 4, wherein the state restricts the usage of the view to a view editor.

7. A graphical user interface editor according to Claim 4, wherein the state invites the user to approve a view.

8. A graphical user interface editor according to Claim 4, wherein the action is restricted to users having a specific role.

9. A graphical user interface editor according to Claim 1, wherein the editor 50 is a WYSIWYG editor.

10. A graphical user interface editor according to Claim 9, wherein the view is dynamically updated at every change.

11. Method of providing a graphical user interface (GUI) editor comprising:
- providing a user interface for defining a layout;
- providing a user interface control for selecting widget;
- providing a user interface for displaying the widget in the layout;
- providing a user interface for configuring the widget; and
- enabling a user to perform the operations of defining a layout, selecting a widget, displaying the widget in the layout and configuring the widget in any order.

12. A method according to Claim 11 further comprising providing a repository for storing instances of said widgets with their configuration, irrespectively of a display status of said widget.

13. A method according to Claim 11 further comprising providing controls for modifying the configuration of a widget stored in said repository.

14. A non-transitory machine-readable storage medium encoded with instructions executable by a processor for providing a graphical user interface (GUI) editor, the machine-readable storage medium comprising:
- instructions to provide a user interface for defining a layout;
- instructions provide a user interface control for selecting widget;
- instructions to provide a user interface for displaying the widget in the layout;
- instructions to provide a user interface for configuring the widget; and
- instructions to provide a user interface enabling a user to perform the operations of defining a layout, selecting a widget, displaying the widget in the layout and configuring the widget in any order.

15. A method of generating a console comprising:
- editing a view using the graphical user interface editor of Claim 1 ;
- using the view in the console.
